# FASCICULE DE BREVET EUROPEEN

(11) **EP 0 786 125 B1**
(45) Date de publication et mention de la délivrance du brevet: **12.01.2000**
(21) Numéro de dépôt: 95934693.3
(22) Date de dépôt: 12.10.1995
(51) Int. Cl.: G07F 17/30, G11B 27/00

(54) **APPAREIL DOMESTIQUE D'ENREGISTREMENT ET DE RESTITUTION D'INFORMATIONS AUDIOVISUELLES NUMERIQUES**
HÄUSLICHES AUFNAHME- UND WIEDERGABEGERÄT FÜR NUMERISCHE, AUDIOVISUELLE INFORMATIONEN
HOME DIGITAL AUDIOVISUAL INFORMATION RECORDING AND PLAYBACK APPARATUS

(30) Priorité: 12.10.1994 WO PCT/FR94/01185
(43) Date de publication de la demande: 30.07.1997
(60) Demande divisionnaire: 99104682.2
(73) Titulaire: TOUCHTUNES MUSIC CORPORATION, Las Vegas, NV 89104 (US)
(72) Inventeur: NATHAN, Guy, F-91330 Yerres (FR); MASTRONARDI, Tony, Pierrefonds, Quebec H8Y 3L2 (CA)
(74) Mandataire: Debay, Yves
(86) Numéro de dépôt international: FR9501336
(87) Numéro de publication internationale: WO9612259

(56) Documents cités:
- EP-A- 0 631 283
- DE-A- 3 820 835
- FR-A- 2 602 352
- US-A- 4 920 432
- US-A- 4 949 187

## Description

La présente invention concerne un appareil domestique d'enregistrement et de restitution d'informations audiovisuelles numériques. Il est connu des systèmes de reproduction audiovisuelle généralement rencontrés dans les cafés ou les pubs et appelés juke-boxes. Ces appareils sont en général onéreux et comportent des capacités de stockage importantes qui ne correspond pas à une utilisation domestique (voir EP-A-631 283). La présente invention a pour but de pallier les inconvénients de l'art antérieur en proposant un dispositif qui permet à un utilisateur d'acquérir à son domicile des sélections d'informations audiovisuelles numériques par utilisation de sa télévision et de les reproduire en utilisant pour la partie visuelle l'écran de télévision, -pour la partie audio les éléments de sa chaîne stéréophonique.

Un premier but de l'invention est de proposer un appareil qui permet d'effectuer la sélection et le téléchargement d'informations numériques, la restitution de ces informations numériques à destination d'appareils domestiques ou l'utilisation du dispositif en karaoké.

Ce premier but est atteint par le fait qu'un appareil domestique d'acquisition et de restitution de l'information numérique audiovisuelle élaboré autour d'un dispositif à microprocesseur associé par l'intermédiaire d'interface numérique à des moyens de visualisation et par une autre interface à des moyens de reproduction sonore et par une interface de télécommunication de télécharger à partir d'un serveur les informations numériques constituant la sélection audio ou la sélection visuelle, caractérisé en ce qu'il comporte des moyens de commande (1021 à 1025) permettant de contrôler un dispositif d'affichage et de sélectionner par l'intermédiaire d'un menu, un mode de fonctionnement parmi trois dans lesquels le dispositif soit restitue une information mémorisée dans sa mémoire de masse, soit permet l'enregistrement dans sa mémoire de masse d'une nouvelle information numérisée, soit mixe aux informations numérisées délivrées par la mémoire de masse une information analogique délivrée par un micro.

Un deuxième but de l'invention est de proposer un appareil modulaire qui permet par la suite une évolution du dispositif pour assurer l'enregistrement des sélections sur un médium transportable.

Ce but est atteint par le fait qu'un module supplémentaire d'enregistrement est connecté par une interface spécifique à l'appareil principal et un menu d'enregistrement peut être sélectionné à l'aide des boutons des moyens de commande du dispositif de l'appareil principal.

Selon une autre particularité le module d'enregistrement permet de produire des médias d'enregistrements transportables pour être exploités sur une autre unité d'exploitation d'informations audiovisuelles numérisées.

Un autre but de l'invention est de proposer un appareil modulable qui permet à l'utilisateur d'évoluer vers une solution permettant le stockage d'une pluralité de sélections d'informations audio ou visuelles ou audiovisuelles.

Ce but est atteint par le fait qu'un module (108) de mémorisation de masse permet d'enregistrer une pluralité d'informations audiovisuelles numérisées.

Un dernier but est de proposer un procédé de téléchargement qui permet de s'assurer le paiement effectif et la non sélection d'informations audiovisuelles par les personnes non habilitées sur le système domestique.

Ce but est atteint par le fait que le mode de fonctionnement de commande de sélection de la liaison permettant le téléchargement avec un serveur, ne s'établit qu'une fois que l'utilisateur a donné par exemple son numéro de carte de crédit et confirmé l'ensemble de sa ou de ses sélections en fournissant un numéro d'identification personnel. Ce but peut également être atteint au moyen de tout autre procédé de paiement tel que : carte à puce préchargée ou facturation automatique sur la facture téléphonique de l'abonné.

D'autres particularités et avantages de la présente invention apparaîtront plus clairement à la lecture de la description ci-après faite en référence aux dessins annexés dans lesquels :
la figure 1 représente une vue schématique des faces avant et arrière de l'appareil selon l'invention ;
la figure 2 représente une vue schématique de l'architecture générale des circuits électroniques constituant l'appareil ;
la figure 3 représente l'organisation du système multitâches gérant l'ensemble des moyens matériels et logiciels ;
la figure 4 représente un logigramme de description du fonctionnement du système de gestion multitâches ;
la figure 5A représente une première variante d'extension du module pour l'appareil de la figure 1 ;
la figure 5B représente une deuxième variante de module d'extension pour l'appareil de la figure 1 ;
la figure 6 représente le logigramme de mise en file d'attente des sélections ;
la figure 7 représente le schéma d'organisation des bases de donnée ;
la figure 8 représente un exemple d'affichage graphique réalisé par le module graphique du module de mode en service
la figure 9 représente un exemple d'affichage graphique réalisé par le module graphique du module de mode d'acquisition de nouvelles sélections.
la figure 10 représente un exemple d'affichage graphique réalisé par le module graphique du module de mode de sélection et d'exploration.
le figure 11 représente un exemple d'affichage graphique réalisé par le module graphique du module de mode de choix de catégorie

De préférence, mais cependant de manière non limitative, le système de reproduction audiovisuelle utilise les éléments matériels énumérés et référencés ci-après.

Le module principal est un dispositif électronique de type microprocesseur compatible PC de haute performance, avec par exemple un système du type Intel 80486 DX/2 qui possède des moyens de mémorisation et les caractéristiques suivantes:
- compatibilité avec le bus local Vesa,
- antémémoire du processeur: 256 kO,
- mémoire vive : RAM de 32 MO ou plus autoalimentée,
- ports série et parallèle de haute performance,
- adaptateur graphique avec sortie vidéo bande de Base, Fréquences radio (RF) et connecteur SCART,
- contrôleur de bus type SCSI/2 pour constituer le contrôleur d'extension,

Tout autre unité centrale possédant des performances équivalentes ou supérieures pourra être utilisée dans l'invention.

Cette unité centrale (106) commande et gère une circuit de contrôle de son (110), un circuit (104) de contrôle des télécommunications, un circuit (105) de contrôle des entrées, un circuit (111) de contrôle des moyens de visualisation.

Le contrôleur d'entrée (105) interface avec la commande à distance (101) et les boutons de contrôle (102) situés sur le devant de l'appareil. Le contrôleur de télécommunication (104) interface avec différents moyens matériels de télécommunication (103) pour permettre au système d'utiliser plusieurs média pour communiquer avec l'extérieur. Le contrôleur de son (110) est le convertisseur N/A à entrées/sorties multiples auquel se connecte le microphone et l'amplificateur du client. Le contrôleur vidéo fournit les signaux bande de Base et RF des écrans à afficher. Le contrôleur d'extension (107) permet de relier les autres modules (108, 109) au module principal.

Un lien de communication entre le module principal et le centre de distribution est aussi requis. Ce lien peut être soit un modem pour ligne téléphonique classique ou spécialisée ayant une vitesse d'au moins 28.8 kbps, soit un lien par antenne parabolique et satellite, soit un lien de télécommunication ISDN ou soit par câble coaxial ou par antenne de réception MMDS.

Pour les liens de type Hertzien, les requêtes se font par ligne téléphonique classique.

La reproduction sonore des sélections musicales est faite par un circuit à convertisseur numérique/analogique prévus pour supporter un grand nombre de sources d'entrée tout en fournissant une sortie présentant une qualité sonore similaire à un disque compact. L'adaptateur audio multimédia à microprocesseur Sound Blaster SBP32AWE de chez Creative Labs Inc. en est un exemple, sur lequel deux tampons mémoire (1101, 1102) sont ajoutés dans le but explicité ultérieurement.

De même le circuit de commande des moyens de visualisation comporte également deux mémoires tampon (1111, 1112) dans le but explicité ultérieurement.

L'opération du système et sa gestion se fait en utilisant soit les boutons de contrôle (102) de l'appareil ou une télécommande (101). Une télécommande à infrarouge associé à un récepteur infrarouge avec adaptateur série peut servir dans le système.

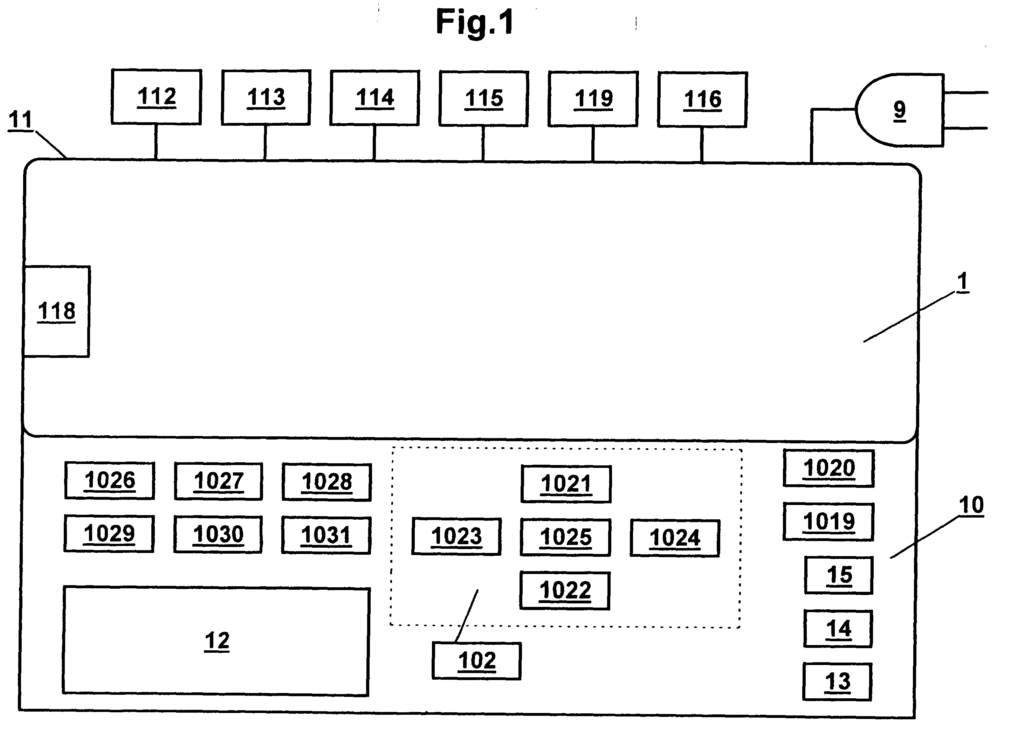

Le schéma de la figure 1 indique que le module principal a une sortie audio stéréophonique de type RIAA, une entrée pour un microphone pour faire du karaoké, une sortie vidéo RF et bande de Base, et un connecteur pour le relier aux autres modules d'expansion et un connecteur SCART.

L'affichage des informations se fait sur le poste de télévision du propriétaire soit par le connecteur RF ou le connecteur "Baseband" ou le connecteur SCART.

Un système à piles permet de maintenir la mémoire du système lorsque celui-ci est éteint. Ces piles longue durée sont rechargées quand l'appareil est alimenté en électricité.

Une alimentation thermiquement régulée et ventilée fournit l'énergie au système. Cette alimentation peut être protégée contre les surintensités et les suroscillations.

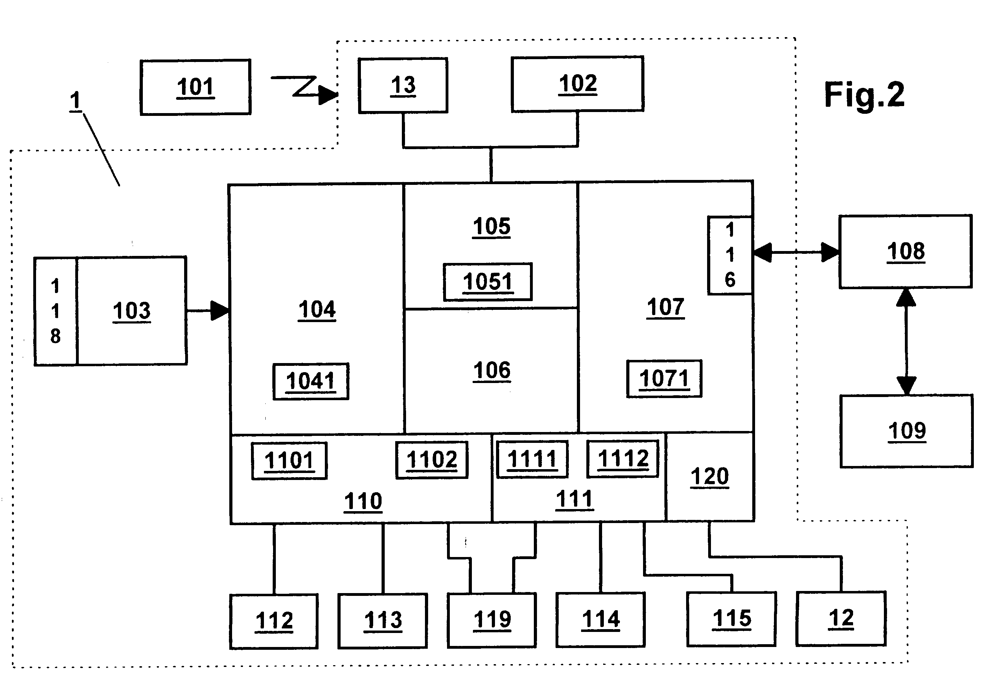

Le dispositif électronique est placé dans un boîtier comportant sur une de ses faces (11) par exemple arrière un cordon d'alimentation électrique avec prise secteur (9), une double sortie audio (112) comportant des prises de type Jack RCA, un connecteur d'entrée micro (113) un connecteur vidéo (115) pour vidéo bande de Base type NTSC PAL ou SECAM et une sortie fréquence radio type RF (114) et un connecteur européen SCART (119). Comme on peut le voir sur la figure 2. La sortie audio (112) et l'entrée micro (113,) sont reliées à la carte contrôleur de son (110) la sortie vidéo/audio RF (114) est reliée à la carte contrôleur vidéo (111) et à la carte contrôleur de son (110) à travers un modulateur RF aux normes M-B/G ou L par exemple, le connecteur SCART (119) est relié à la carte contrôleur vidéo (111) et à la carte contrôleur de son (110), la vidéo bande de base (115) est reliée à la carte contrôleur vidéo (111) les connecteurs d'extension (116) sont reliés à la carte contrôleur d'extension (107), un connecteur (118) de type ligne téléphonique est relié à la carte de circuit de télécommunication (103) elle-même reliée au contrôleur de télécommunication (104). Enfin le boîtier comporte sur sa face (10) avant un ensemble de boutons (102) comportant une flèche (1021) permettant le déplacement vers le haut d'un curseur, une flèche (1022) permettant le déplacement vers le bas d'un curseur, une flèche (1023) permettant le déplacement vers la gauche d'un curseur, une flèche (1024) permettant le déplacement vers la droite d'un curseur et enfin un bouton central (1025) permettant l'activation ou la validation et correspondant à un événement appui (down) équivalent d'une souris, les flèches permettant le déplacement d'un curseur et correspondant à un événement traîne (drag). Le relâchement du bouton (1025) correspond à un événement de relâchement d'un bouton c'est-à-dire up pour une souris. La face avant (10) comporte un bouton de couleur rouge (1019) permettant de réaliser la fonction "achat" qui est décrite ultérieurement. La face avant comporte également un écran à cristaux liquide (12) relié à la carte de contrôleur graphique (120) pour permettre d'effectuer un affichage minimum dans le cas où l'utilisateur ne connecte pas un écran de télévision sur la sortie vidéo ou RF. Cette face comporte également un bouton (15) permettant de régler le volume d'un écouteur associé à une prise (14) pour un casque d'écoute hifi. Enfin un bouton (1020) d'arrêt et de mise en marche du dispositif est disponible sur cette face avant (10). Une zone dans laquelle est placé un capteur infrarouge (13) lui-même relié à la carte contrôleur d'entrée (105) permet de recevoir les signaux infrarouge d'une télécommande (101). Il est bien évident que le type de capteur peut être modifié selon le type de télécommande utilisé sans sortir du cadre de l'invention. Enfin cette face avant comporte éventuellement un ensemble de boutons permettant de commander les fonctions habituellement utilisées pour la reproduction d'un CD, c'est-à-dire, la fonction " pause" (1026), la fonction "arrêt" (1027), la fonction "lecture" (1028), la fonction "retour" (1029), la fonction "avance" (1030), la fonction "suivant" (1031). Ces fonctions sont associées au module de stockage (108) et d'enregistrement (109) lorsqu'ils sont reliés par le connecteur d'extension (116) à la carte d'extension (107) comme représenté à la figure 2.

Outre ces éléments, un microphone relié au contrôleur de son (110), permet l'utilisation de cet équipement en machine de karaoké.

Deux tampons (1101, 1102) sont associés au circuit contrôleur de son (110) pour permettre de mémoriser chacun de façon alternative une information correspondant à un quart de seconde de son. De même deux tampons (1111, 1112) sont associés au circuit contrôleur de vidéo (111) capables chacun et alternativement de mémoriser un dixième de seconde d'images. Enfin un tampon respectif (1041, 1051, 1071) est associé à chacun des circuits de contrôleur de communication (104), d'interface d'entrée (105) et d'extension (107).

Le logiciel d'exploitation du système a été élaboré autour d'une librairie d'outils et de services très largement orientée vers le domaine audiovisuel dans un univers multimédia. Cette librairie inclut de manière avantageuse un système d'exploitation multitâche performant qui autorise efficacement l'exécution simultanée de multiples fragments de code. Ce logiciel d'exploitation permet ainsi les exécutions concurrentes, de manière ordonnée et en évitant tout conflit, d'opérations réalisées sur les moyens de visualisation, les moyens de reproduction sonores de même que la gestion des liaisons de télécommunications au travers du réseau de distribution. De plus, ce logiciel présente une grande flexibilité.

Cette librairie comporte comme on le verra ultérieurement une interface de programmation pour les boutons (102) ou la télécommande (101) associée à chaque module graphique qui sera décrit ultérieurement et associant aux fonctions du module graphique associé, des fonctions de réaction à une activation par un ou plusieurs événements extérieurs. Les événements extérieurs proviennent de l'utilisateur et sont traités par l'interface pour pouvoir être interprétés par le système d'exploitation comme l'équivalent d'un événement souris.

Les données audiovisuelles numérisées et compressées sont stockées dans des moyens de mémorisation non volatile du CPU (106) tel que la RAM statique.

Chaque sélection audio est disponible selon deux formats numérisés: avec une qualité hi-fi ou une qualité CD.

Il est essentiel de noter que, bien que tous les modules décrits séparément semblent être utilisés d'une manière séquentielle, en réalité, les tâches spécifiques des modules sont exécutées simultanément dans un environnement utilisant le système d'exploitation multitâche.

Le premier module, dénommé SSM, est le module de démarrage du système. Ce module ne fournit qu'un seul service, par conséquent il se charge automatiquement au moment de la mise sous tension du système. Il rentre alors directement dans le mode "en service" du module dénommé RMM.

Le module RMM est le module du mode "en service". Dans ce mode, le système est prêt pour manipuler toute requête qui peut être déclenchée par différents événements prédéfinis, comme par exemple:
- l'utilisateur qui touche une des touches (102) de commande de la face avant (10) ou de télécommande (101). Dans ce cas le système transfère le contrôle de sa session de premier plan au module CBSM du mode de sélection et d'exploration client.

Le système reste dans le mode "en service" jusqu'à ce que l'un des événements décrits ci-avant se produise.

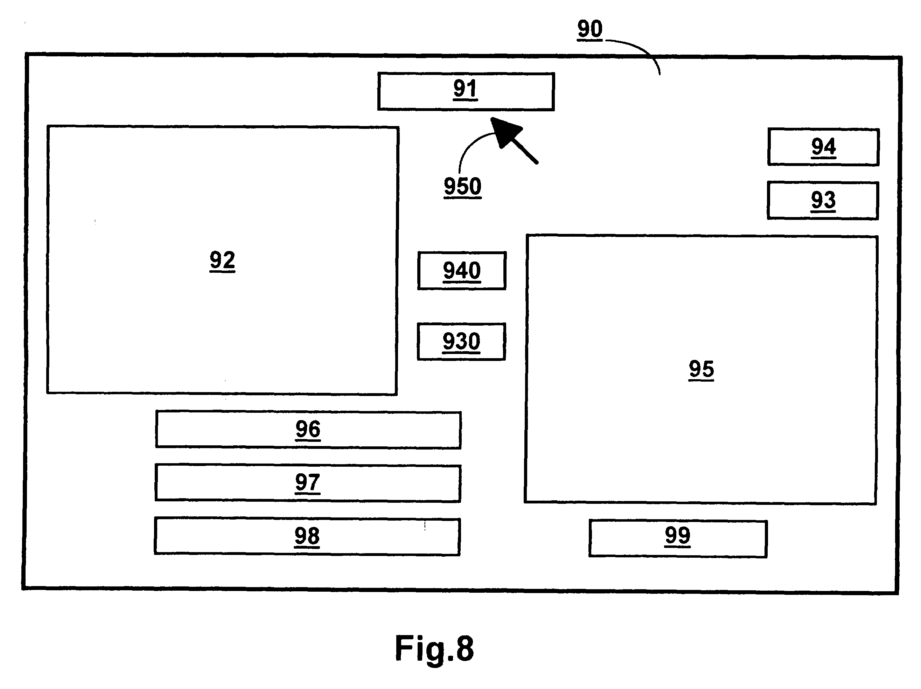

Ainsi le module RMM du mode en service comporte un module permettant un affichage graphique correspondant par exemple à celui de la figure 8. L'écran dit de reproduction de ce module graphique permet l'affichage d'un fenêtre (90) comportant par exemple l'affichage dans une zone (91) de la mention "en cours" d'exécution. Une deuxième fenêtre (92) de dimension inférieure et incluse dans la première fenêtre (90) permet la représentation graphique de la pochette du disque en cours d'exécution. Dans un pavé numérique (93) est indiqué le temps total correspondant aux morceaux à exécuter mémorisés dans la file d'attente. Dans un autre pavé numérique (94) est indiqué le nombre de chansons en file d'attente. Dans une troisième fenêtre (95) de dimension inférieure et incluse dans la première fenêtre (90) est représentée une image animée tel qu'un clip vidéo, des images de synthèses ou un texte défilant s'il s'agit de l'exécution d'un titre karaoké mémorisées dans les fichiers images. Dans un pavé alphanumérique (96) figure le titre de l'album et dans un deuxième pavé alphanumérique (97) le nom de l'album. Dans un troisième pavé alphanumérique (98) est mentionné le nom de l'artiste ou du groupe. Ces informations proviennent de la base de données (16) à partir du numéro d'identification du titre et des informations mémorisées dans la base de données selon les processus d'accès explicités ultérieurement.

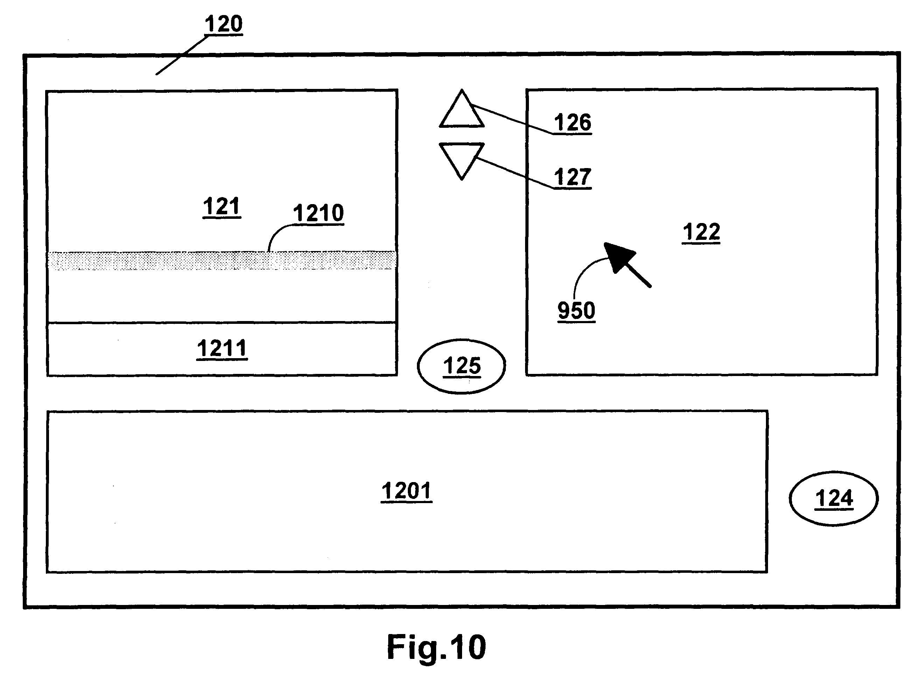

Cet écran de reproduction affiche le titre qui est exécuté, sa durée totale (940), le temps restant (930) et la pochette du disque d'où elle provient. L'utilisation de la fonction "Action" de la télécommande ou du bouton (1025), le curseur (950) pouvant se trouver n'importe où sur l'écran, permet au propriétaire de passer à l'écran de sélection représenté à la figure 10.

Dans le cas où le juke-box n'est plus en cours d'exécution de chanson et lorsque les chansons de la file sont épuisées, l'une des deux fenêtres (92, 95) pourra servir à afficher des événements promotionnels ou des animations en images de synthèse.

Un module spécifique à la télécommande permet de réaliser des fonctions qui commandent au système d'accepter une entrée demandée par un dispositif de télécommande infrarouge.

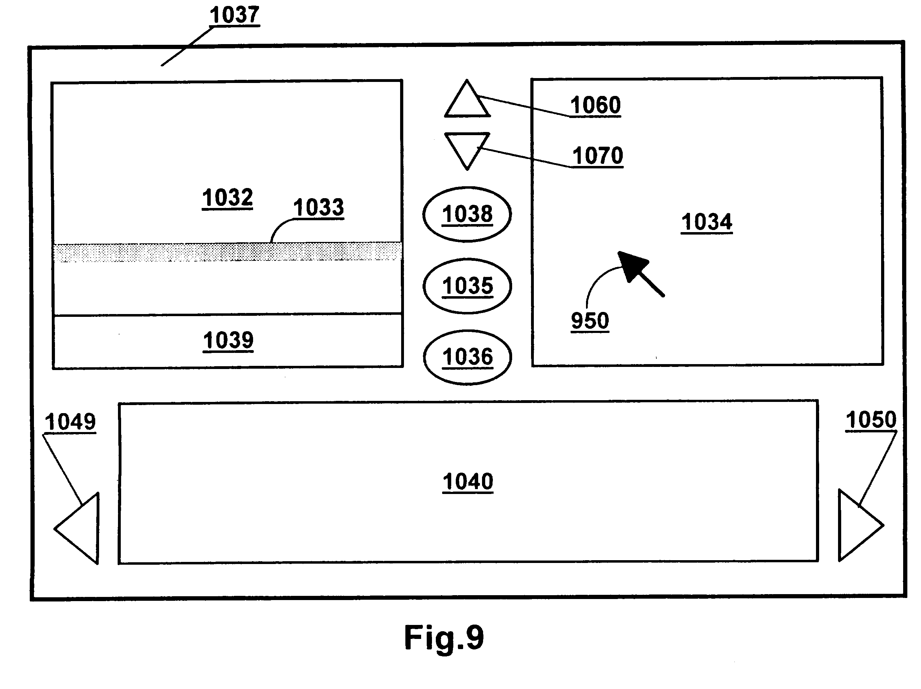

Ce module télécommande peut lors de l'actionnement d'une touche "Achat" équivalente à (1019) de la télécommande provoquer un affichage de l'écran graphique illustré à la figure 9.

Cette télécommande dispose de touches ayant des fonctions équivalentes à celles décrites précédemment à la figure 1 c'est-à-dire : (1026) à (1031), (1021) à (1025), (1019) à (1020).

L'affichage de la figure 9 permet à l'utilisateur d'accéder au mode d'acquisitions de nouvelles sélections en liaison avec le module NSAM.

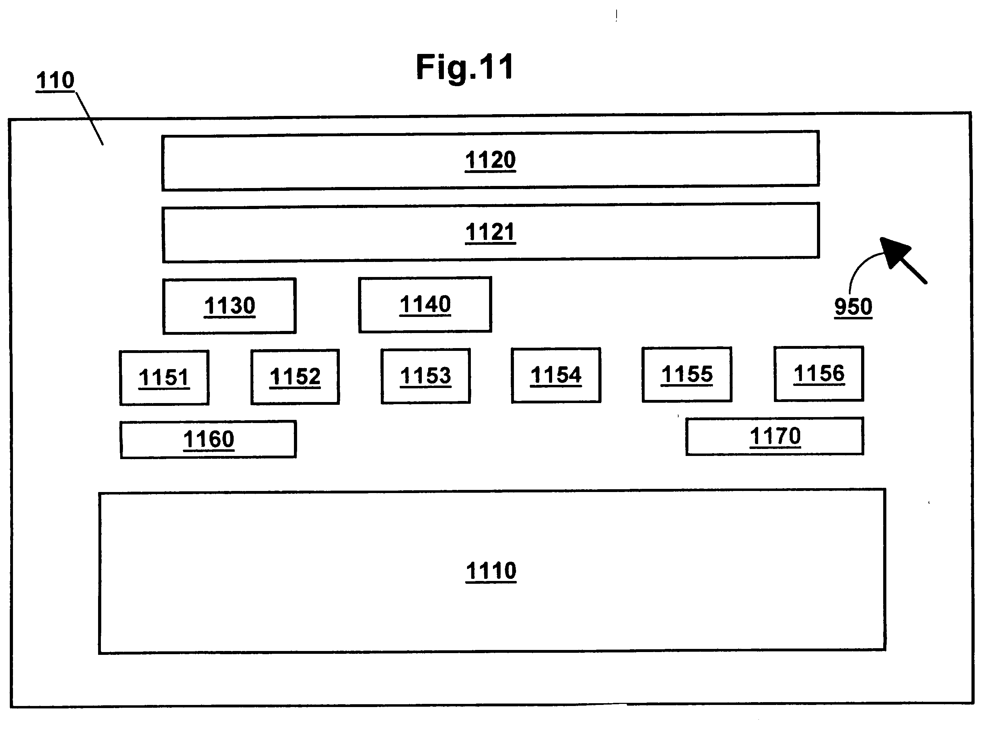

Ce module représenté à la figure 9 comporte un module graphique qui permet l'affichage d'une fenêtre (1037). Cette fenêtre incorpore trois sous-fenêtres (1032, 1039, 1034), la première (1032) sous forme de liste déroulante permet par positionnement du curseur (950) sur des boutons de flèches déroulement (1060, 1070) de faire défiler la liste de sélection en appuyant sur la touche (1025). Cette liste de sélection ne peut être affichée, soit qu'après avoir visualisé l'écran de sélection de catégorie (figure 11), en ayant préalablement activé le bouton (1036), la mise en surbrillance d'un titre (1033) s'effectuant en positionnant le curseur sur le titre en question et en actionnant la touche (1025), soit qu'après avoir introduit dans la sous fenêtre (1039) au moins un caractère au moyen du clavier (1040) en utilisant le curseur et la touche (1025).

D'une manière générale, les zones ou boutons graphiques sont actionnés au moyen du positionnement du curseur (950) grâce aux flèches (1021 à 1024) et à l'activation du bouton (1025) ou au moyen des touches de fonctions équivalentes de la télécommande.

La fenêtre (1034) permet d'afficher :
- lorsque le bouton de commande de sélection (1038) est activé, la mention "Tapez votre NIP ", en effet, l'achat ne peut être possible que si le numéro d'identification personnel est accepté par l'unité centrale (1) du système de reproduction.

L'utilisateur tape le "NIP" sur le clavier (1040) si le NIP est correct, la fenêtre (1034) affiche par exemple la mention "Numéro de carte de crédit" ou bien si l'achat est facturé sur la note de téléphone, la fenêtre (1034) affiche par exemple "Achat en cours d'exécution".

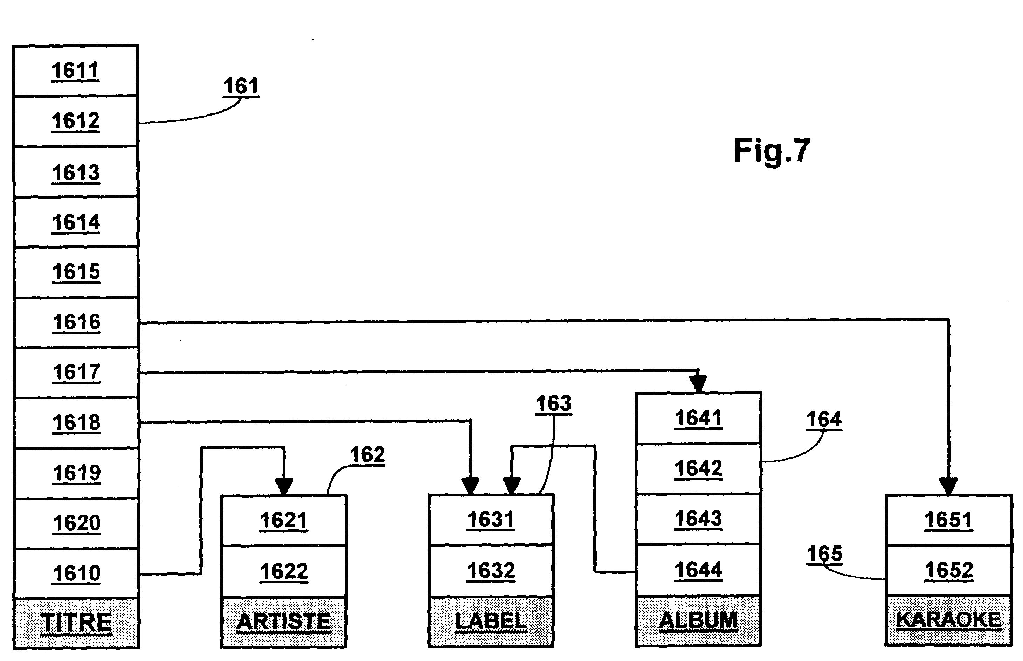

Un catalogue de titres musicaux est conservé dans le module principal. Ce catalogue peut être mis-à-jour à la demande du propriétaire ou automatiquement lors de l'achat. Le coût de chaque entrée est affiché de même que le total de la facture par exploitation de l'information (1619) de la base de donnée (figure7).

Lors d'une communication il est possible que le centre serveur en profite pour faire une mise-à-niveau du logiciel d'exploitation du système.
- lorsque le bouton "détail" (1035) est activé, il apparaît sur la fenêtre (1034) différentes informations associées au titre en surbrillance, telles que le prix du titre sélectionné, sa durée, le nom de l'album, le nom de l'artiste ou toute autre information significative du titre sélectionné.

Un bouton (1038) permet de commander la sélection qui est ensuite téléchargée selon le mode décrit ci-avant. Un bouton (1035) permet d'afficher des détails sur la sélection. Un troisième bouton (1036) permet de sélectionner la catégorie de musique ou sélection à commander. L'actionnement de ce troisième bouton (1036) par l'utilisateur permet d'afficher l'écran représenté à la figure 11 que l'on va décrire ci-après. Enfin l'écran de la figure 9 comporte également un pavé alphanumérique représentant un clavier (1040) qui permet à l'utilisateur en tapant, soit le nom de l'album, de l'artiste ou du titre qui s'inscrit dans la sous fenêtre (1039), de faire apparaître dans la fenêtre (1032) une liste de titres plus ou moins restreinte en fonction du critère utilisé et des touches de commandes permettant d'afficher par la flèche (1049) l'écran précédent et par la flèche (1050) l'écran suivant.

Comme il a été dit précédemment, l'apparition de l'écran graphique de sélection illustré à la figure 10 se fait au moyen du bouton (1025) à partir de n'importe quelle zone de l'écran graphique de reproduction (figure 8). Un exemple de réalisation du module graphique du module de mode de sélection et d'exploration de l'utilisateur est représenté à la figure 10 dans laquelle une fenêtre (120) comporte trois sous fenêtres (121, 1211, 122), la première (121) étant déroulante. Le déroulement de la première fenêtre (121) est commandé par des flèches de déroulement supérieur (126) et inférieur (127). Comme décrit précédemment pour le module NSAM, l'apparition d'une liste de titres dans la fenêtre (121) ne pourra se faire que si un critère de sélection a été introduit à l'aide du clavier (1201) associé à la fenêtre (1211) de la figure 10 ou à l'aide de la fenêtre (110) déclenchée par le bouton de catégorie (125) associée, soit au clavier (1110) pouvant inscrire un texte alphanumérique dans les pavés (1120, 1121, 1130, 1140), soit aux zones (1151) à (1156) de la fenêtre (110) représentée figure 11. La fenêtre (121) permet l'affichage des titres des sélections dans l'ordre alphabétique par nom de chanson. La fenêtre (122) permet d'afficher le visuel correspondant à la pochette de la chanson. Un bouton (125) permet de sélectionner la catégorie des chansons et de passer à l'affichage de la fenêtre suivante représentée à la figure 11. Un bouton (124) permet de valider la ou les sélections pour déclencher leur introduction dans la file d'attente ou leur exécution immédiate et successive si la file est vide. La fenêtre (120) est complétée par un clavier alphanumérique (1201) qui permet de rentrer directement le nom d'un autre chanteur, le titre d'une chanson. L'actionnement du bouton catégorie (125) de la figure 10 équivalent à (1036) de la figure 9 provoque l'appel d'une sous routine de module graphique provoquant l'affichage de la fenêtre (110) de la figure 11 dans laquelle un pavé alphanumérique permet d'introduire, à l'aide du clavier alphanumérique (1110), le nom d'un album dans la zone (1120), un second pavé alphanumérique (1121) permet d'introduire le nom d'un artiste dans la zone (1121), un troisième et quatrième pavés alphanumériques (1130, 1140) permettent d'introduire une année ou une période et enfin une ligne de boutons (1151 à 1156) permet de sélectionner respectivement uniquement les albums concernant la musique de type "rock-and-roll", la musique de type "danse", la musique de type "country", la musique de type "rapp", la musique de type "jazz" ou les musiques pour karaoké. Enfin la fenêtre (110) comporte un bouton (1160) d'annulation en cas d'erreur, un bouton (1170) de validation du choix de la sélection et permettant le retour à la fenêtre (120). A l'intérieur de la sous fenêtre (121) apparaît alors une liste de un à plusieurs titres en fonction du critère de sélection, l'utilisateur sélectionne à l'aide du curseur (950) le titre qu'il désire écouter, celui-ci se met en surbrillance (1210) et simultanément la sous fenêtre (122) affiche le visuel correspondant à la pochette de l'album contenant le titre sélectionné. Il suffit à l'utilisateur d'actionner le bouton (124) qui active le changement d'écran graphique en faisant apparaître la fenêtre (90) dans laquelle il verra apparaître dans la sous fenêtre (92) la pochette du titre qu'il a sélectionné et l'écoutera immédiatement si la file d'attente (94) était à zéro, dans le cas contraire il verra apparaître la pochette du titre en cours d'exécution et dans le pavé (94) le nombre de titres en file d'attente augmenté du nombre de titres qu'il a sélectionné.

Lorsque l'utilisateur actionne le bouton (1156) "karaoké" dans l'écran graphique de catégorie de catégorie illustré dans la figure 11, puis valide son choix en actionnant le bouton graphique (1170), l'écran de sélection de la figure 10 apparaît avec une liste de titres de karaoké à l'intérieur de la sous fenêtre (121). Il choisit au moyen de la surbrillance (1210) le titre qu'il souhaite exécuter en actionnant ensuite le bouton (124) qui d'une part fait apparaître l'écran de reproduction (90) figure 8 et d'autre part déclenche la lecture des fichiers du titre concerné dans lequel se trouvent toutes les informations nécessaires pour le fonctionnement en mode karaoké décrit ultérieurement.

Le module TSM est le module de mode de services de télécommunications entre le serveur central et le système de reproduction audiovisuelle. Ce module permet de gérer tous les services de gestion disponibles sur le réseau de distribution. Toutes les tâches propres aux télécommunications sont gérées comme des tâches d'arrière-plan du système. Ces tâches n'utilisent toujours que les parties de temps de traitement restant une fois que le système a achevé toutes ses tâches de premier plan. Ainsi, lorsque le système est occupé avec l'une de ses tâches de plus haute priorité, les tâches de télécommunications, automatiquement, vont s'efforcer de diminuer les contraintes sur les ressources du système et récupérer tout temps de traitement du microprocesseur laissé disponible.

Un module SPMM permet la gestion des sélections de musiques chansons ou vidéo mises en file d'attente par le système en vue de leur exécution dans l'ordre de sélection.

Le système d'exploitation multitâches constitue l'élément essentiel pour permettre l'exécution simultanée de multiples fragments de codes et pour gérer les priorités entre les différentes tâches qui se réveillent

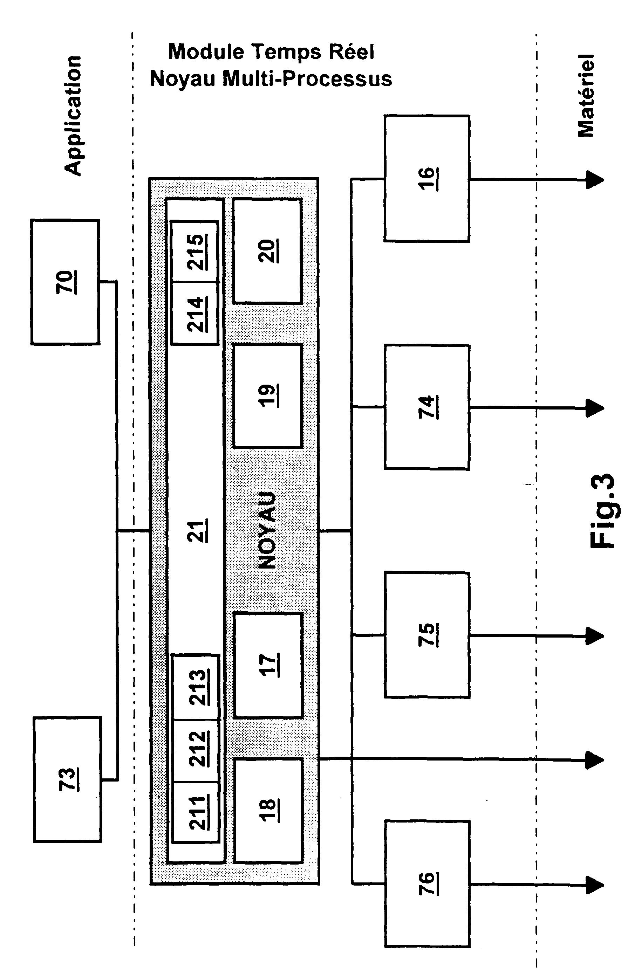

Ce système d'exploitation multitâche est organisé, comme représenté à la figure 3, autour d'un noyau comportant un module (17) de résolution des priorités entre tâches, d'un module (18) superviseur des tâches, d'un module (19) de sérialisation du matériel utilisé et un module (20) de communication des processus. Chacun des modules communique avec des interfaces (21) de programmation des applications et la base de donnée (16). Il y a autant d'interface de programmation qu'il y a d'applications. Ainsi le module (21) comporte une première interface (211) de programmation pour la télécommande (101), une deuxième interface (212) de programmation pour l'écran à cristaux liquide (12), une troisième interface (213) de programmation pour le circuit de contrôle du son (110), une quatrième interface (214) de programmation pour le circuit (111) de contrôle de la vidéo et une cinquième interface (215) pour le circuit (104) de contrôle des télécommunications.

Cinq tâches ayant un ordre de priorité décroissant sont gérées par le noyau (kernel) du système d'exploitation, la première (76) pour les entrées sorties vidéo avec la priorité la plus élevée de niveau, la deuxième (75) de niveau deux concerne le son, la troisième (74) de niveau trois les télécommunications, la quatrième (73) de niveau quatre les interfaces et la cinquième (70) de niveau cinq la gestion. Ces ordres de priorités seront pris en compte par le module (17) de résolution des priorités au fur et à mesure de l'apparition ou de la disparition d'une tâche. Ainsi dès qu'une tâche vidéo apparaît, les autres tâches en cours d'exécution sont suspendues, la priorité est donnée à cette tâche et toutes les ressources du système sont allouées à la tâche vidéo. La tâche vidéo (76) en sortie a pour objet de décharger les fichiers vidéo de la mémoire de masse optionnelle (108) alternativement vers l'un des deux tampons (1111, 1112) tandis que l'autre tampon (1112, respectivement 1111) est utilisé par le circuit (111) contrôleur de vidéo pour produire l'affichage après décompression des données. En entrée la tâche vidéo (76) a pour objet de transférer les données reçues dans le tampon de télécommunication (1041) vers la mémoire vive statique du CPU. Il en est de même pour la tâche son (110), d'une part en entrée entre le tampon de télécommunication (1041) et la mémoire de masse (108) et d'autre part en sortie entre la mémoire de masse (108) et l'un des deux tampons (1101, 1102) du circuit (110) contrôleur de son.

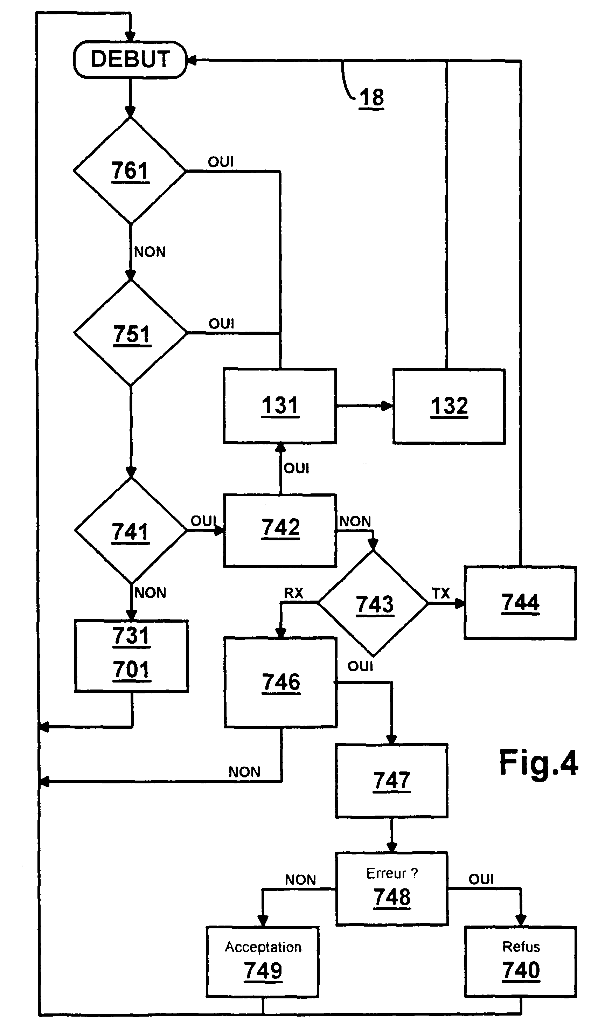

Le module superviseur de tâche (19) va maintenant être décrit en liaison avec la figure 4. Ce module effectue dans l'ordre de priorité un premier test (761) pour déterminer si la tâche vidéo est active, c'est à dire si un des tampons vidéo (1111, 1112) est vide. Dans le cas où la réponse est négative le module superviseur de tâche passe au test suivant qui est un second test (751) pour déterminer si la tâche son est active, c'est à dire si un des tampons (1101, 1102) est vide. En cas de réponse négative un troisième test (741) détermine si la tâche communication est active, c'est à dire si le tampon (1041) est vide. Après une réponse affirmative à l'un des test, le module superviseur de tâche (18) remplit à l'étape (131) la file de requête d'accès mémoires et exécute à l'étape (132) cette requête en lecture ou en écriture entre la mémoire du CPU ou de masse et le tampon correspondant à la tâche active, puis reboucle sur le premier test. Lorsque le test (741) sur l'activité d'une communication est affirmatif le superviseur (18) effectue un test (742) pour déterminer s'il s'agit de lire ou d'écrire de l'information en mémoire. Si oui la requête d'écriture ou de lecture est mise dans la file à l'étape (131). Dans le cas contraire le superviseur détermine à l'étape (743) s'il s'agit d'une transmission ou d'une réception et dans le cas d'une transmission envoie par l'étape (744) le bloc d'information au serveur central. Dans le cas d'une réception le superviseur vérifie à l'étape (746) que les tampons du noyau sont libres d'accès et dans l'affirmative envoie un message au serveur central pour accepter la réception d'un bloc de donnée à l'étape (747). Après la réception d'un bloc, un contrôle d'erreur (748) est effectué du type de redondance cyclique CRC (cyclic redundant check). Le bloc est refusé à l'étape (740) en cas d'erreur, ou accepté dans le cas contraire à l'étape (749), par l'envoi d'un message correspondant au serveur central signifiant que le bloc portant un numéro déterminé est refusé ou accepté, puis reboucle sur les tests de départ. Dans le cas ou aucune tâche de niveau supérieur est active le superviseur effectue à l'étape (731 ou 701) le traitement des tâches d'interface ou de gestion.

Le noyau (Kernel) s'occupe de la rotation d'exécution des tâches selon leur priorité et de la communication entre celle-ci. Au Kernel se greffe une tâche qui gère la vidéo, une qui gère le son, une autre qui gère les télécommunications et une dernière qui fait la gestion de banques de données. La communication entre les tâches et le kernel se fait par une interface de programmation commune.

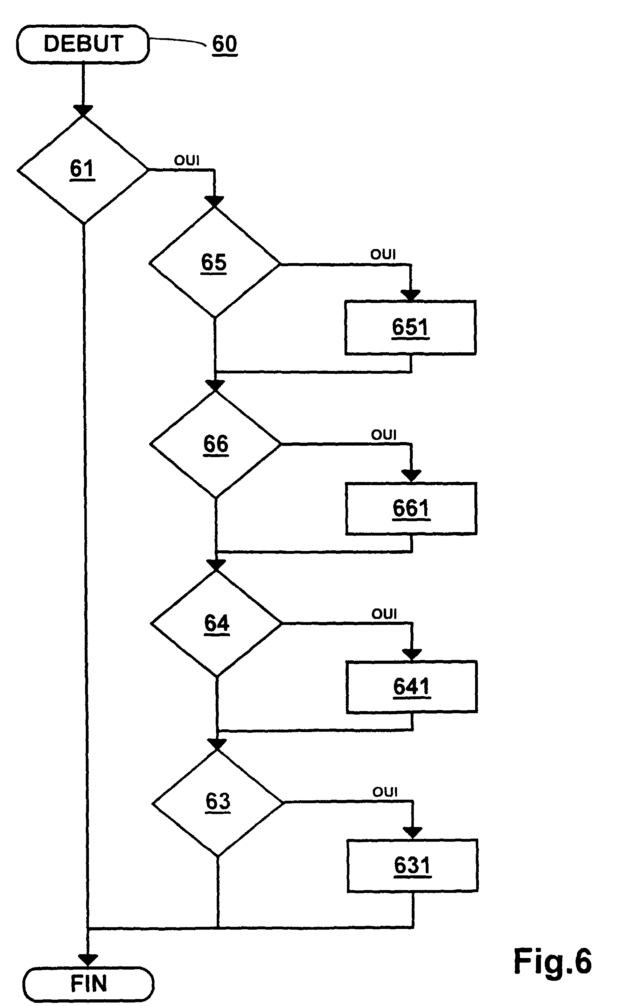

Le nombre et le type de tâches actives est indiqué au superviseur (18) par l'exécution du module de gestion des sélections SPMM dont le logigramme est représenté à la figure 6. La gestion effectuée par ce module commence par un test (61) pour déterminer si des sélections sont en attente dans la file.

Par la suite si le test (61) sur la file d'attente détermine que des sélections sont en attente, quand l'utilisateur sélectionne un titre qu'il désire entendre, celui-ci est automatiquement écrit dans un fichier de file d'attente d'une mémoire non volatile du système, tel par exemple la mémoire vive statique autoalimentée.

Ainsi, chaque sélection faite ne sera jamais perdue en cas de panne électrique. Le système joue (reproduit) la sélection en entier avant de la retirer du fichier de la file d'attente.

Quand la sélection a été reproduite en entier, elle est retirée du fichier de file d'attente et le système vérifie s'il y en a d'autres dans le fichier d'attente. S'il y en a une autre, le système commence immédiatement à jouer la sélection.

Le temps total écoulé entre la fin d'une sélection et le début de la suivante est inférieur à 0,5 seconde.

Le traitement se poursuit par un test (65) pour déterminer si la sélection contient un scénario audio. Si oui, ce scénario est inscrit à l'étape (651) dans la file des tâches du superviseur (18). Si non, ou après cette inscription le traitement se poursuit par un test (66) pour déterminer si la sélection contient des images animées. Dans l'affirmative le scénario de la vidéo est inscrit à l'étape (661) dans la file des tâches du superviseur (18). Si non ou dans l'affirmative après cette inscription, le traitement se poursuit par un test (64) pour déterminer si la sélection contient un graphique fixe. Dans l'affirmative le scénario de la présentation graphique est inscrit à l'étape (641) dans la file des tâches du superviseur (18). Si non ou dans l'affirmative après cette inscription le traitement se poursuit par un test (63) pour déterminer si la sélection contient un scénario de publicité. Dans l'affirmative le scénario est inscrit à l'étape (631) dans la file des tâches du superviseur (18). Ainsi le superviseur (18) informé des tâches ouvertes peut gérer le déroulement des tâches simultanément.

Du fait, d'une part du mode de gestion des tâches en affectant la priorité la plus élevée à la tâche vidéo, d'autre part de la présence de tampons matériel ou logiciel affecté à chacune des tâches pour mémoriser temporairement des données et de la présence des tampons de statut relatif à chaque tâche, il a été possible de faire gérer toutes ces tâches par une seule unité centrale avec un système d'exploitation multitâche qui offre les possibilités d'un affichage vidéo c'est à dire d'images animées par opposition à une représentation graphique dans laquelle les informations à traiter sont moins complexes.

De plus le système d'exploitation multitâche incluant une librairie contenant un ensemble d'outils et de services, permet de faciliter très significativement l'exploitation du fait de son intégration dans les moyens de mémorisation et de la grande flexibilité ainsi apportée. En particulier, il est, grâce à cela, possible de créer un univers multimédia en gérant de manière simple et efficace simultanément la reproduction de sons, l'affichage d'images ou de graphiques et l'animation vidéo. En outre, puisque les informations audiovisuelles sont numérisées et stockées dans les moyens de mémorisation, il est utilisé considérablement moins de place que pour un système de reproduction audiovisuelle traditionnel et par conséquent l'encombrement du système selon l'invention est nettement moindre. La base de données (16) est constituée comme représentée à la figure 7 de plusieurs bases.

Une première (161) portant sur les titres des morceaux audiovisuel, une deuxième (162) sur les artistes, une troisième (163) sur les étiquettes ou LABELS, une quatrième (164) sur les albums, une cinquième (165) sur paroles des sélections karaoké. La première base (161) comporte une première information (1611) donnant le titre du morceau, une deuxième information (1612) donnant l'identification du produit , cette identification étant unique. Une troisième information (1613) permet de connaître la catégorie à savoir jazz, classique, variété etc. Une quatrième information (1614) permet de connaître la date de la mise à jour. Une cinquième information (1615) permet de connaître la longueur en seconde nécessaire pour exécuter le morceau.

La sixième information (1616) est un lien avec la base karaoké. La septième information (1617) est un lien avec l'album. La huitième information(1618) est un lien avec les étiquettes ou LABELS. La neuvième information (1619) donne le coût d'acquisition pour l'utilisateur ;

La dixième information (1610) est un lien avec la base de donnée des artistes. Ce lien est constitué par l'identité de l'artiste. La base de donnée de l'artiste comporte outre l'identité de l'artiste, constitué par information (1621), une deuxième information (1622) constituée par le nom de l'artiste ou le nom du groupe. La base des étiquettes ou LABELS comporte une première information (1631) constituée par l'identité de l'étiquette ou du LABEL établissant le lien avec la huitième information (1618) de la base de titre et une deuxième information (1632) constituée par le nom de l'étiquette ou du LABEL. La base des informations d'album comporte une première information qui est l'identité de l'album (1641) qui constitue le lien avec la septième information (1617) de la base titre. Une deuxième information (1642) constitue le titre, une troisième information (1643) est constituée par la date de mise à jour de l'album, et une quatrième information (1644) constituée par l'identité de l'étiquette ou du LABEL. La base karaoké est constituée d'une première information (1651) donnant l'identité du titre associé et correspond à la sixième information (1616) de la base titre. Une deuxième information (1652) constitue pour chaque titre un fichier de chaque syllabe et le temps écoulé depuis le début de la chanson et au bout duquel le chanteur doit prononcer la syllabe pour faire apparaître sur l'écran affichant les phrases à chanter un marqueur indiquant la syllabe au moment déterminé par un compteur de temps. Le compteur de temps est déclenché lors de l'utilisation en karaoké par le début de l'exécution des informations numérique de la musique et incrémenté au rythme de l'horloge du processeur qui sert également de base de temps pour la musique et la carte contrôleur son.

On comprend aisément que cette base de données (16) permet donc d'informer l'utilisateur des coûts et des particularités à chacun des artistes ou groupes d'artistes dont les chansons ou les vidéos sont interprétées, et d'afficher les paroles nécessaires à l'utilisateur de l'appareil en mode karaoké.

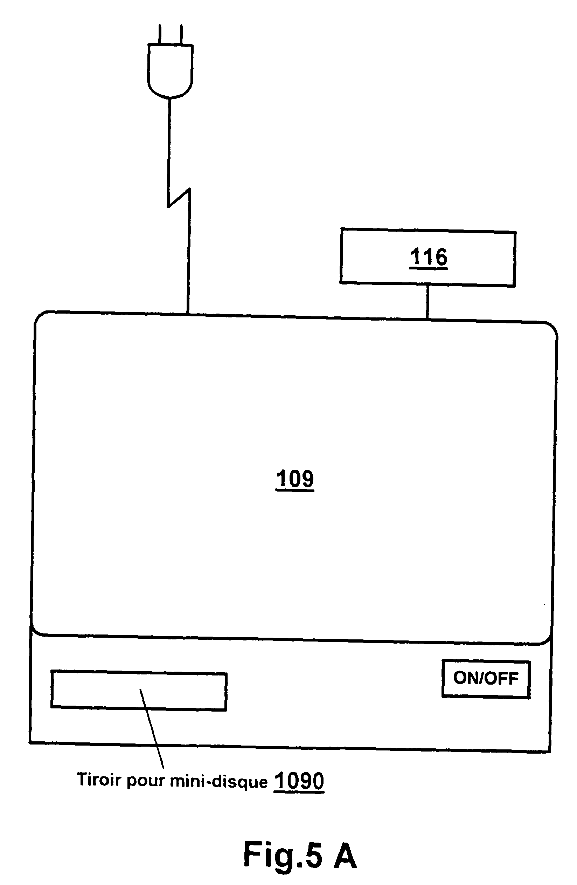

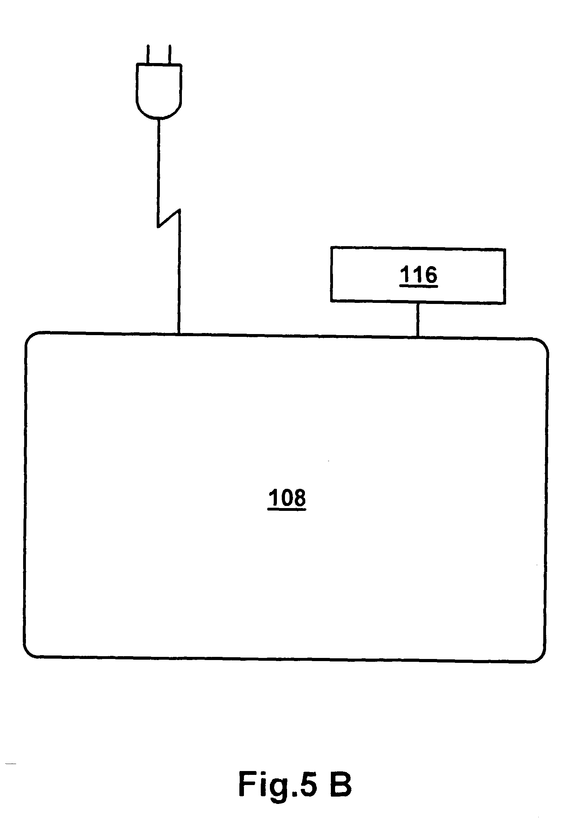

Enfin dans une des deux variantes de l'invention on peut adjoindre au système principal représenté à la figure 1 un premier module d'enregistrement correspondant à la représentation de la figure 5A. Ce module d'enregistrement est connecté par le connecteur d'extension (116) au module principal (1) et d'autre part par une prise au réseau électrique. Ce module (109) est en fait un module d'enregistrement permettant par exemple d'enregistrer sur un mini disque magnéto optique une ou plusieurs pièces audiovisuelles transférées vers ce médium à travers la carte contrôleur d'extension (107) et le connecteur d'extension (116) au dispositif (109) qui est capable de fonctionner avec un bus de type SCSI/2. Ceci permet donc d'obtenir par la suite des mini disques magnéto optique (1090) sur lesquels les pièces audiovisuelles souhaitées ont été enregistrées pour une utilisation sur un autre appareil de lecture tel qu'un auto radio ou tout autre dispositif équivalent. Dans cet exemple on a pris une unité à mini disque magnéto optique mais on pourrait très bien remplacer ce médium par un enregistrement numérique sur bande magnétique ou tout autre dispositif équivalent permettant une non diminution de la qualité sonore des informations enregistrées et une exploitation sur des éléments de chaîne stéréo ou d'auto radio commercialisés.

En dernier lieu l'utilisateur peut adjoindre à son élément central (1) un autre module (108) qui est constitué par une unité de mémorisation externe, cette unité de mémorisation pouvant être constituée d'un système à disque dur ou de tout autre système équivalent permettant un stockage de masse pour assurer à l'utilisateur l'emmagasinage de plusieurs pièces audio visuelles alors que le système principal (1) ne peut emmagasiner dans sa mémoire non volatile qu'un nombre limité de pièces, ce nombre est limité par la taille de la mémoire vive RAM statique auto alimentée qui participe également au fonctionnement de l'unité principale (1).

Le fonctionnement est le suivant :
a) en écoute
   L'utilisateur commence par connecter le juke-box à sa chaîne stéréophonique et à son poste de télévision puis à les mettre sous tension.
   S'il veut écouter ou voir une vidéo, il appuie sur la fonction "Action " de la télécommande pour obtenir l'écran de sélection. A l'aide des options de recherche, il fait son choix et démarre la reproduction. Le nouveau choix est mis en file s'il y a déjà une pièce active.
   Un écran à cristaux liquides sur l'appareil permet d'accéder à la liste par ordre alphabétique de manière séquentiel. Un bouton "lecture" (1028) permet de démarrer la reproduction.
   L'utilisateur peut, avec la télécommande ou les boutons de contrôle (1026 à 1031), faire une pause, arrêter, lire, aller en arrière, aller en avant, passer aut titre suivant.
   Il peut demander éventuellement au système de jouer toutes les pièces de façon séquentielles ou aléatoirement.
b) lors de l'achat
   De l'écran de sélection on accède à l'écran d'acquisition. Pour acheter un titre, le système demande le numéro d'identification personnel (NIP). L'utilisation du NIP protège les parents contre la facturation abusive que leurs enfants pourraient générer. Dans cet écran l'utilisateur peut acheter une ou des pièces musicales qui lui sont proposées à partir d'une liste qui est résidante dans l'appareil et qui est mise-à-jour lors de communication avec le centre serveur de distribution. La recherche dans cette liste se fait par titre, par artiste, par catégorie, par ordre alphabétique et par date de lancement. Le coût de chaque pièce est affiché ainsi que le total de la facture. Ensuite, il indique au système que ses choix sont terminés. Le système vérifie alors s'il y a assez de mémoire pour contenir toutes les pièces demandées. S'il y a un problème le système en avise le client, sinon il demande le numéro de carte de crédit du client ou l'affiche s'il est déjà en mémoire. Puis, le système, tente de rejoindre le centre serveur pour effectuer la transaction soit par ligne téléphonique, soit par lien satellite, ou soit par lien de communication dédié. Puisque le système est multitâches, il peut quand même exécuter des pièces audiovisuelles pendant le transfert.
c) par sa carte télécommunication chaque appareil peut se connecter à un centre serveur. Cette possibilité permet une flexibilité qui ne peut être égalée par les autres appareils de type similaire. Elle permet :
   - de faire du dépannage à distance pour les problèmes mineurs,
   - d'aider un technicien à localiser la ou les pièces défectueuses,
   - de permettre l'achat de pièces musicales sans avoir à se déplacer de chez soi,
   - de choisir seulement les pièces musicales qui nous intéressent,
   - d'avoir accès à une liste impressionnante de pièces musicales qui ne sont pas toujours disponibles chez le disquaire,
   - de faire une mise-à-jour ou des modifications au logiciel.

Lorsqu'une mise-à-jour du logiciel est reçue, cette nouvelle version sera utilisée lors de la prochaine utilisation du système.

Il est possible d'inclure de la publicité dans les écrans. Cette publicité peut être changée à chaque fois que le système se connecte au centre serveur.

La numérisation du son et des images sera faite à l'aide de logiciels commerciaux utilisant des formats de fichiers standard.

Les informations numériques audio et vidéo seront conservées selon un format compressé standard. Elles seront décompressées lors de la reproduction. Ceci à pour objet de minimiser l'utilisation de l'espace mémoire et de diminuer le temps de transfert du centre serveur.

Le centre serveur, étant un ordinateur, valide la carte de crédit et facture le client automatiquement sans intervention manuelle et peut répondre à plusieurs appels simultanés.

Toutes modifications à la portée de l'homme de métier fait également partie de l'invention. Ainsi lorsqu'il est question de tampons, il est rappelé que ceux-ci peuvent être présents soit physiquement sur le circuit auquel ils sont affectés soit réalisés par logiciel en réservant des emplacements de mémorisation

## Revendications

1. Appareil domestique d'acquisition et de restitution de l'information numérique audiovisuelle comprenant un dispositif à microprocesseur (106) relié par l'intermédiaire d'une interface numérique (111) à des moyens de visualisation, par une autre interface (110) à des moyens de reproduction sonore et par une interface de télécommunication (104) à des moyens de téléchargement à partir d'un serveur des informations numériques constituant la sélection audio ou la sélection visuelle, caractérisé en ce qu'il comporte des moyens de commande (1021 à 1025) permettant de contrôler un dispositif d'affichage (12) et de sélectionner par l'intermédiaire d'un menu, un mode de fonctionnement parmi trois dans lesquels le dispositif soit restitue une information mémorisée dans ses moyens de mémorisation (106), soit permet l'enregistrement dans ses moyens de mémorisation (106) d'une nouvelle information numérisée, soit mixe aux informations numérisées délivrées par le moyen de mémorisation une information analogique délivrée par un microphone.

2. Appareil selon la revendication 1, caractérisé en ce qu'un module supplémentaire d'enregistrement (109) est connecté par une interface spécifique à l'appareil principal et un menu d'enregistrement peut être sélectionné à l'aide des boutons des moyens de commande du dispositif de l'appareil principal.

3. Appareil selon la revendication 2, caractérisé en ce que le module d'enregistrement (109) permet de produire des médias d'enregistrements transportables pour être exploités sur une autre unité d'exploitation d'informations audiovisuelles numérisées.

4. Appareil selon la revendication 1 ou 2, caractérisé en ce qu'un module (108) de mémorisation de masse permet d'enregistrer une pluralité d'informations audiovisuelles numérisées.

5. Appareil selon une des revendications 1 à 4, caractérisé en ce que le mode de fonctionnement de commande de sélection de la liaison permettant le téléchargement avec un serveur ne s'établit qu'une fois que l'utilisateur a donné l'identification de son moyen de paiement et confirmé l'ensemble de sa ou de ses sélections en fournissant un numéro d'identification personnel.

## Patentansprüche

1. Haushaltsgerät für die Erfassung und Wiedergewinnung von audiovisuellen digitalen Informationen, mit einer Mikroprozessorvorrichtung (106), die über eine digitale Schnittstelle (111) mit Visualisierungsmitteln, über eine weitere Schnittstelle (110) mit Schallwiedergabemitteln und über eine Telekommunikationsschnittstelle (104) mit Mitteln zum Fernladen von einem Server von die Audiowahl oder die visuelle Wahl bildenden digitalen Informationen verbunden ist, dadurch gekennzeichnet, daß es Steuermittel (1021 bis 1025) enthält, die die Steuerung einer Anzeigevorrichtung (12) und über ein Menü die Wahl einer von drei Betriebsarten ermöglichen, in denen die Vorrichtung entweder in ihren Speichermitteln (106) gespeicherte Informationen wiedergewinnt oder die Aufzeichnung von neuen digitalen Informationen in ihren Speichermitteln ermöglicht oder zu den von den Speichermitteln gelieferten digitalen Informationen von einem Mikrophon gelieferte analoge Informationen hinzumischt.

2. Gerät nach Anspruch 1, dadurch gekennzeichnet, daß an das Hauptgerät über eine spezifische Schnittstelle ein zusätzliches Aufzeichnungsmodul (109) angeschlossen ist und mit Hilfe von Tasten der Steuermittel der Vorrichtung des Hauptgeräts ein Aufzeichnungsmenü gewählt werden kann.

3. Gerät nach Anspruch 2, dadurch gekennzeichnet, daß das Aufzeichnungsmodul (109) die Erzeugung von transportablen Aufzeichnungsmedien ermöglicht, die in einer anderen Einheit zur Auswertung digitalisierter audiovisueller Informationen ausgewertet werden können.

4. Gerät nach Anspruch 1 oder 2, dadurch gekennzeichnet, daß ein Massenspeichermodul (108) die Aufzeichnung mehrerer digitalisierter audiovisueller Informationen ermöglicht.

5. Gerät nach einem der Ansprüche 1 bis 4, dadurch gekennzeichnet, daß es der Betriebsart der Steuerung der Wahl der das Fernladen ermöglichenden Verbindung mit einem Server nur einmal vorkommt, daß der Anwender die Identifizierung seines Zahlungsmittels eingegeben und die Gesamtheit seiner getroffenen Wahl bestätigt hat, indem er eine persönliche Identifizierungsnummer eingibt.

## Claims

1. Domestic appliance for the capturing and retrieval of audiovisual digital information comprising a microprocessor device (106) connected via a digital interface (111) to display means, via another interface (110) to sound-reproduction means and via a telecommunications interface (104) to means for downloading from a server digital information constituting the audio selection or the visual selection, characterised in that it comprises control means (1021 to 1025) making it possible to control a display device (12) and to select via a menu, one operating mode from among three, in which the device either retrieves information stored in its memory means (106), or permits the recording in its memory means (106) of another piece of digitised information, or combines with the digitised information supplied by the memory means analogue information supplied by a microphone.

2. Appliance according to Claim 1, characterised in that an additional recording module (109) is connected by a specific interface to the main appliance and a recording menu can be selected using the buttons of the control means of the device of the main appliance.

3. Appliance according to Claim 2, characterised in that the recording module (109) makes it possible to produce transportable recording media so as to be used on another unit for handling digitised audiovisual information.

4. Appliance according to Claim 1 or 2, characterised in that a mass memory module (108) makes it possible to record a plurality of pieces of digitised audiovisual information.

5. Appliance according to one of Claims 1 to 4, characterised in that the operating mode of selection control for the link with a server allowing the downloading, is only established once the user has given the identification of his payment means and confirmed all his selection(s) by providing a personal identification number.
